# EUROPEAN PATENT APPLICATION

(11) **EP 4 832 334 A1**
(43) Date of publication of application: **28.10.2026**
(21) Application number: 26174257.1
(22) Date of filing: 23.04.2026
(51) Int. Cl.: H02M 7/5395, H02M 1/00, H02M 1/32, H02M 1/36, H02M 1/44, H02M 3/156, H02M 3/335, H02P 1/02, H02P 6/06, H02P 6/20

(54) **FAN CIRCUIT FOR A SERVER**

(30) Priority: 23.04.2025 CN 202520789999 U
(71) Applicant: Purple Cloud Development Pte. Ltd., Singapore 128424 (SG)
(72) Inventor: LIU, Yulong, Hui Zhou, 516006 (CN)
(74) Representative: Grünecker Patent- und Rechtsanwälte PartG mbB

(57) **Abstract**

A fan circuit for a server including a microcontroller unit (MCU) module, a high-voltage hot-swap soft-start switching circuit configured to receive power from an external power supply, a three-phase inverter bridge circuit, a π-type filter circuit electrically connected between the high-voltage hot-swap soft-start switching circuit and the three-phase inverter bridge circuit, a motor, and a bus current detection overcurrent protection circuit configured to detect a bus current of the three-phase inverter bridge circuit and provide a corresponding detection signal to the MCU module. The three-phase inverter bridge circuit having upper bridge arms electrically connected to control terminals of the MCU module and lower bridge arms electrically connected to the motor.

## Description

### RELATED APPLICATIONS

### TECHNICAL FIELD

The present disclosure relates to the field of server technologies, and more particularly, to a fan circuit for a server.

### BACKGROUND

With the widespread use of servers in data centers and computing systems, heat dissipation has become significantly important. Server systems typically generate substantial heat during operation, and effective thermal management is necessary to ensure stable performance, reliable operation, and longevity of electronic components.

Cooling fans are often used in servers to facilitate heat dissipation. With increasing performance requirements, there is a expanding demand for fan circuits that offer better efficiency, diminished noise, steady startup behavior, and enhanced operational reliability under a variety of working circumstances.

### SUMMARY

The invention is defined in the appended claims.

Aspects of the disclosure provide a fan circuit for a server. The fan circuit includes a microcontroller unit (MCU) module, a high-voltage hot-swap soft-start switching circuit configured to receive power from an external power supply, a three-phase inverter bridge circuit, a π-type filter circuit electrically connected between the high-voltage hot-swap soft-start switching circuit and the three-phase inverter bridge circuit, a motor, and a bus current detection overcurrent protection circuit configured to detect a bus current of the three-phase inverter bridge circuit and provide a corresponding detection signal to the MCU module, wherein the three-phase inverter bridge circuit includes upper bridge arms electrically connected to control terminals of the MCU module and lower bridge arms electrically connected to the motor.

In an embodiment, the high-voltage hot-swap soft-start switching circuit includes a first capacitor having a first terminal connected to the external power supply and a second terminal connected to ground, a first resistor connected in parallel with the first capacitor, and a switching unit having an output connected to the π-type filter circuit.

In an embodiment, the π-type filter circuit includes a second capacitor having a first terminal connected to the high-voltage hot-swap soft-start switching circuit and a second terminal connected to ground, a first inductor connected in series with the second capacitor, and a third capacitor having a first terminal connected to the first inductor and a second terminal connected to the external power supply, wherein a connection node between the first inductor and the third capacitor forms an output terminal of the π-type filter circuit connected to the three-phase inverter bridge circuit.

In an embodiment, the fan circuit can further include a back electromotive force (EMF) isolation absorption circuit electrically connected between the π-type filter circuit and the three-phase inverter bridge circuit.

In an embodiment, the back electromotive force isolation absorption circuit includes a diode having an anode connected to an output terminal of the π-type filter circuit, a capacitor connected to a cathode of the diode and to ground, and a Zener diode connected in parallel with the capacitor, the Zener diode having an anode connected to ground and being configured to provide an output to the three-phase inverter bridge circuit.

In an embodiment, the MCU module is configured to execute a motor control algorithm. In an embodiment, the fan circuit can further include a DC-DC buck circuit electrically connected between the π-type filter circuit and the MCU module and configured to supply power to the MCU module.

In an embodiment, the fan circuit can further include an overvoltage and undervoltage detection circuit electrically connected to the π-type filter circuit and configured to detect a voltage and provide a corresponding detection signal to the MCU module.

In an embodiment, the fan circuit can further include a dual-isolation protection PWM signal input circuit configured to receive an external PWM signal and provide an isolated control signal to the MCU module.

In an embodiment, the fan circuit can further include a an FG isolation output circuit configured to receive a FG signal and output an isolated FG signal to the MCU module.

In an embodiment, a voltage sampling output terminal of the motor is electrically connected to a voltage sampling input terminal of the MCU module.

### BRIEF DESCRIPTION OF DRAWINGS

Aspects of the present disclosure can be understood from the following detailed description when read with the accompanying figures. It is noted that, in accordance with the standard practice in the industry, various features are not drawn to scale. In fact, the dimensions of the various features may be increased or reduced for clarity of discussion.
FIG. 1 illustrates a schematic block diagram of the fan circuit.
FIG. 2 illustrates a control flow diagram of the fan circuit.
FIG. 3A illustrates a control circuit and MCU portion of the fan circuit.
FIG. 3B illustrates a three-phase inverter bridge circuit of the fan circuit.
FIG. 4 illustrates a schematic diagram of the high-voltage hot-swap soft-start switching circuit, the π-type filter circuit, and the back electromotive force isolation absorption circuit.
FIG. 5 illustrates a schematic diagram of the dual-isolation protection PWM signal input circuit.
FIG. 6 illustrates a schematic diagram of the DC-DC buck circuit.
FIG. 7 illustrates a schematic diagram of the overvoltage and undervoltage detection circuit.

### DETAILED DESCRIPTION

The present disclosure will be described more fully below with reference to the accompanying drawings. Preferred embodiments of the present disclosure are illustrated in the drawings. The present disclosure, however, may be embodied in many different forms and is not limited to the embodiments set forth herein. Rather, these embodiments are provided so that the disclosure of the present application will be more thorough and complete.

It should be noted that, when an element is described as being "fixed to" another element, it may be directly fixed to the other element or one or more intervening elements may also be present. When an element is described as being "connected to" another element, it may be directly connected to the other element or one or more intervening elements may also be present. The terms "vertical," "horizontal," "left," "right," and similar expressions used herein are for illustrative purposes only and do not represent the only possible implementations.

Unless otherwise defined, all technical and scientific terms used herein have the same meanings as commonly understood by a person having ordinary skill in the art to which the present disclosure belongs. The terms used in the specification of the present disclosure are only for the purpose of describing particular embodiments and are not intended to limit the present disclosure. As used herein, the term "and/or" includes any and all combinations of one or more of the associated listed items.

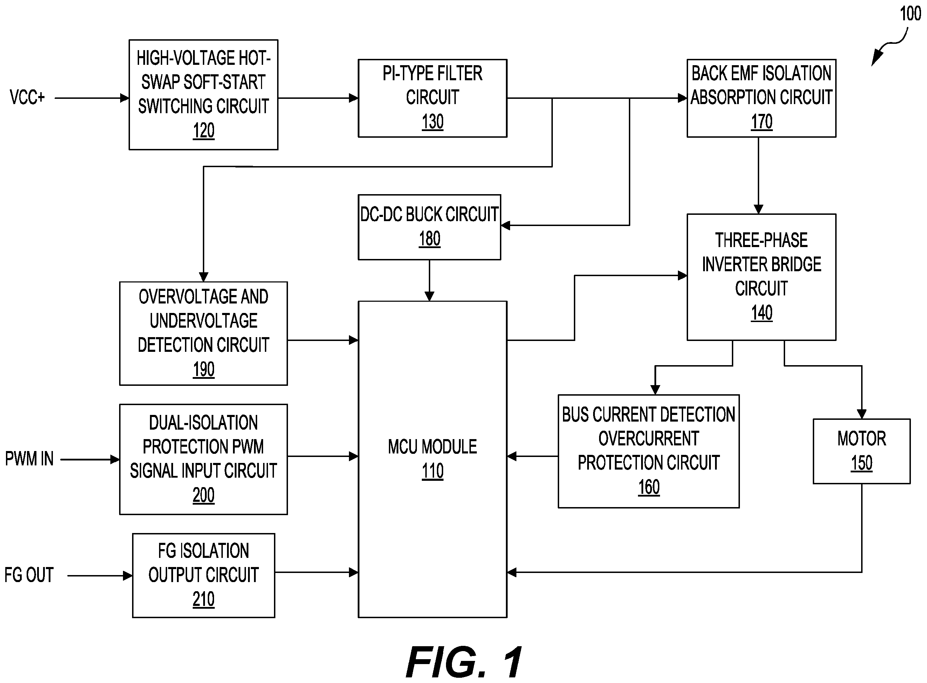

Referring to FIG. 1, the present embodiment discloses a fan circuit 100 for a server. The fan circuit 100 includes an MCU module 110, a high-voltage hot-swap soft-start switching circuit 120, a π-type filter circuit 130, a three-phase inverter bridge circuit 140, a motor 150, and a bus current detection overcurrent protection circuit 160. An input terminal of the high-voltage hot-swap soft-start switching circuit 120 is externally connected to a power supply. An output terminal of the high-voltage hot-swap soft-start switching circuit 120 is also connected to an input terminal of the π-type filter circuit 130. An output terminal of the π-type filter circuit 130 is connected to a power input terminal of the three-phase inverter bridge circuit 140. Upper bridge arms of the three-phase inverter bridge circuit 140 are connected to bridge arm control terminals of the MCU module 110, and lower bridge arms of the three-phase inverter bridge circuit 140 are connected to an input terminal of the motor 150. A voltage sampling output terminal of the motor 150 is connected to a voltage sampling input terminal of the MCU module 110. An input terminal of the bus current detection overcurrent protection circuit 160 is connected to a bus current output terminal of the three-phase inverter bridge circuit 140. An output terminal of the bus current detection overcurrent protection circuit 160 is connected to a bus current detection terminal of the MCU module 110. The MCU module 110 may include a microcontroller configured to perform motor control functions, such as executing control algorithms for driving the motor 150. In some embodiments, the MCU module 110 may include a general-purpose microcontroller, a dedicated motor control controller, or any suitable processing unit capable of implementing the described control operations. For example, the MCU module 110 may include a microcontroller integrating an 8051 core and a motor control engine, or may be implemented using an FU68 series microcontroller, although other microcontrollers or processing units may also be used.

In the fan circuit 100 of the present embodiment, the MCU module 110 uses a chip integrating an 8051 core and a motor control engine for being applied to high-speed, high-power DC fan products. The fan circuit 100 may further employ a sensorless field-oriented control (FOC) algorithm, thereby greatly reducing fan noise and vibration and enabling precise commutation. In addition, by collaboration between the high-voltage hot-swap soft-start switching circuit 120 and the π-type filter circuit 130, the fan circuit 100 achieves an electronically delayed switching function while preventing surge current, ensuring stable startup and stable operation of the fan. Further, in the present embodiment, the high-voltage hot-swap soft-start switching circuit 120 isolates the sparking phenomenon that would otherwise occur at the moment of front-end voltage contact during live operation, thereby protecting the fan switch. The present disclosure further uses the bus current detection overcurrent protection circuit 160 to detect the motor bus current in real time and feed the detected current back to the MCU module 110. The MCU module 110 correspondingly controls and adjusts the motor operating current, enabling current-loop control and avoiding startup current overshoot.

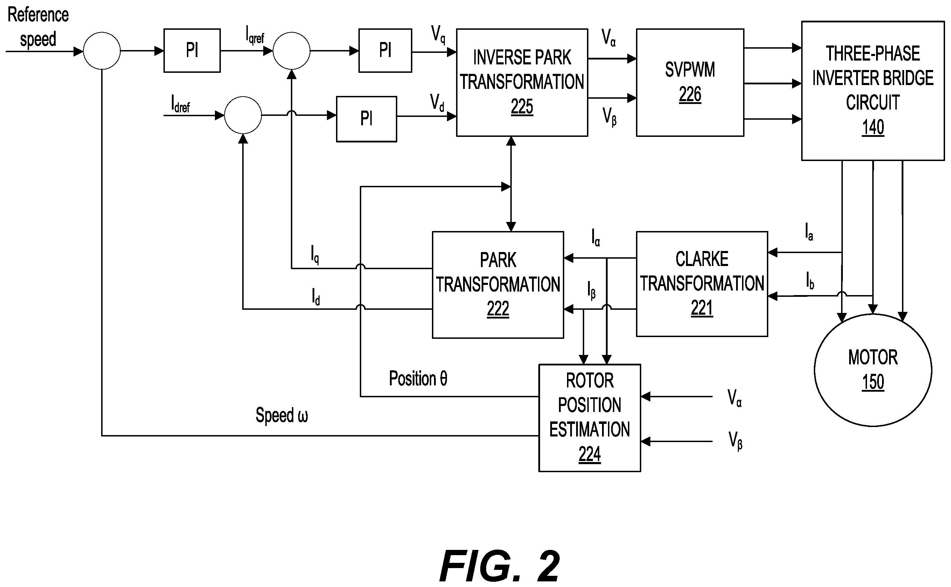

The MCU module 110 may include a microcontroller having processing, control, and peripheral functionalities suitable for motor control applications. For example, the microcontroller may include a high-speed arithmetic unit, a comparator, a pre-driver, a high-speed analog-to-digital converter (ADC), a high-speed multiplier/divider, communication interfaces (CRC/SPI, I2C, and UART), multiple timers, pulse-width modulation (PWM) modules, and a high-voltage low-dropout regulator (LDO). In some embodiments, such functionality may be provided by a microcontroller integrating an 8051 core and a motor control engine, or by specific microcontroller families such as an FU68 series microcontroller. However, other types of microcontrollers or processing units having similar functionalities may also be used. Referring to FIG. 2, a system control process of the fan circuit 100 applied to a server according to the present disclosure is described below.

First, three-phase stator currents of the motor 150 are measured to obtain Ia and Ib. The three-phase currents are converted by Clarke transformation 221 into two-phase currents I_{α} and I_{β}.

Second, according to a motor angle calculated in a previous iteration of the control loop, Park transformation 222 is performed to obtain mutually orthogonal currents I_{d} and I_{q} in a rotating coordinate system.

Third, PI controllers are used to obtain V_{d} and V_{q} from the orthogonal currents I_{d} and I_{q}, which are voltage vectors to be applied to the motor 150. In some embodiments, other control strategies or variations of proportional-integral control may be used.

Fourth, V_{α}, V_{β}, I_{α}, and I_{β} are input into a rotor position estimation algorithm 224 to estimate a new motor angle and rotational speed. In some embodiments, the rotor position may be estimated using various estimation techniques or algorithms.

Fifth, using the new motor angle, V_{d} and V_{q} are inversely transformed by inverse Park transformation 225 into a two-phase stationary coordinate system. This calculation generates next orthogonal voltage values V_{α} and V_{β}. An SVPWM algorithm 226 is then used to determine the magnetic sector in which a synthesized voltage vector is located, as well as to calculate conduction timings of switching tubes in the respective bridge arms of the three phases. Finally, the three-phase voltage required for the motor 150 is generated by the three-phase inverter bridge circuit 140.

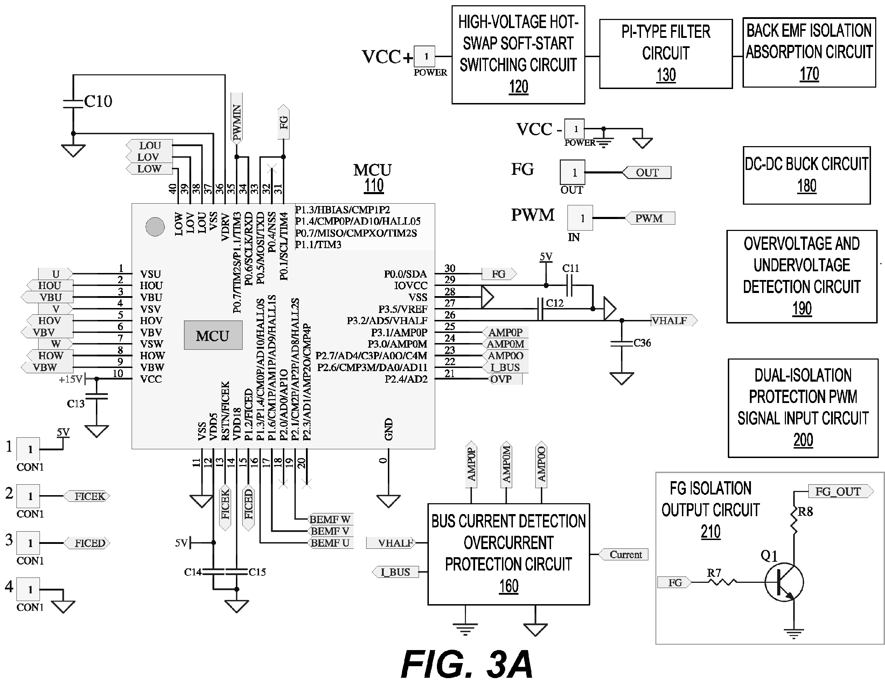

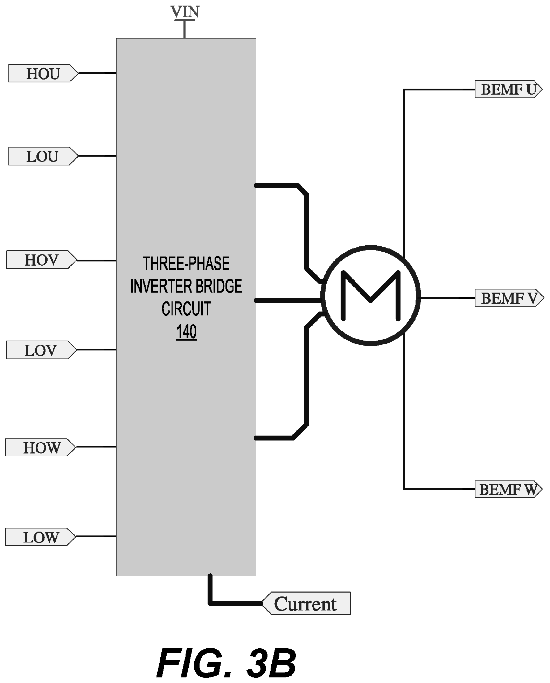

Referring to FIG. 3A and FIG. 3B, a detailed circuit implementation of the fan circuit 100 is illustrated. FIG. 3A illustrates a control portion including the MCU module 110 and associated signal conditioning and interface circuits, and FIG. 3B illustrates a power stage including the three-phase inverter bridge circuit 140 configured to drive the motor 150. In FIG. 3A, the MCU module 110 is connected to input and output interfaces including a PWM input, an FG (Frequency Generator) output, bus current feedback, overvoltage and undervoltage detection signals, and motor-related sensing or control signals. In FIG. 3B, the three-phase inverter bridge circuit 140 receives a supply voltage VIN and outputs three-phase drive signals to the motor 150 under the control of upper-bridge and lower-bridge control signals provided from the MCU module 110 via the control portion shown in FIG. 3A.

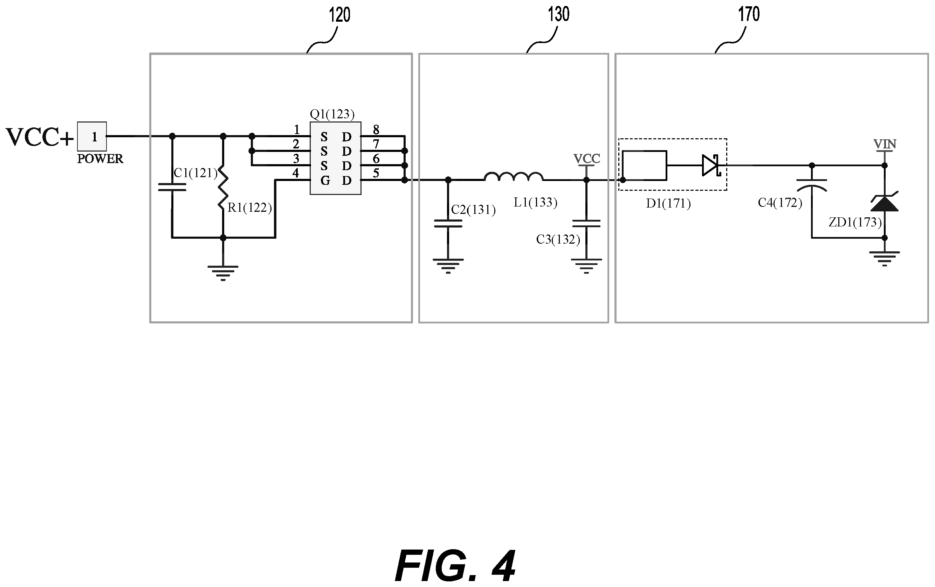

Referring to FIG. 4, in the present embodiment, the high-voltage hot-swap soft-start switching circuit 120 can include a first capacitor C1 (121), a first resistor R1 (122), and a first switching unit Q1 (123). One end of the first capacitor C1 (121) is connected to the external power supply, and another end of the first capacitor C1 (121) is grounded. The first resistor R1 (122) is connected in parallel with the first capacitor C1 (121) to form a parallel circuit unit. An output terminal of the parallel circuit unit is connected to an input terminal of the π-type filter circuit 130. In some embodiments, alternative circuit configurations may be used to implement soft-start functionality.

Referring to FIG. 4, in the present embodiment, the π-type filter circuit 130 can include a second capacitor C2 (131), a third capacitor C3 (132), and a first inductor L1 (133). One end of the second capacitor C2 (131) serves as the input terminal of the π-type filter circuit 130 and is connected to the output terminal of the high-voltage hot-swap soft-start switching circuit 120, and another end of the second capacitor C2 (131) is grounded. Said one end of the second capacitor C2 (131) is further connected in series with the first inductor L1 (133) and then connected to one end of the third capacitor C3 (132). One end of the third capacitor C3 (132) is further externally connected to the power supply, and another end of the third capacitor C3 (132) is grounded. A connection node between the first inductor L1 (133) and the third capacitor C3 (132) serves as the output terminal of the π-type filter circuit 130 and is connected to the power input terminal of the three-phase inverter bridge circuit 140. In some embodiments, equivalent filtering structures or variations of the π-type filter may be used.

Referring to FIG. 1 and FIG. 4, in the present embodiment, the fan circuit 100 for a server can further include a back electromotive force isolation absorption circuit 170. An input terminal of the back electromotive force isolation absorption circuit 170 is connected to the output terminal of the π-type filter circuit 130, and an output terminal of the back electromotive force isolation absorption circuit 170 is connected to the power input terminal of the three-phase inverter bridge circuit 140. By way of the high-voltage hot-swap soft-start switching circuit 120, the π-type filter circuit 130, and the back electromotive force isolation absorption circuit 170, the fan circuit 100 of the present embodiment provides dual anti-surge protection and also has reverse voltage access protection, thereby ensuring high stability.

Referring to FIG. 4, in the present embodiment, the back electromotive force isolation absorption circuit 170 can include a first diode unit D1 (171), a fourth capacitor C4 (172), and a first Zener diode ZD1 (173). An anode of the first diode unit D1 (171) serves as the input terminal of the back electromotive force isolation absorption circuit 170 and is connected to the output terminal of the π-type filter circuit 130. One end of the fourth capacitor C4 (172) is connected to a cathode of the first diode unit D1 (171), and another end of the fourth capacitor C4 (172) is grounded. The first Zener diode ZD1 (173) is connected in parallel with the fourth capacitor C4 (172), and an anode of the first Zener diode ZD1 (173) is grounded. The first Zener diode ZD1 (173) further serves as the output terminal of the back electromotive force isolation absorption circuit 170 and is connected to the power input terminal of the three-phase inverter bridge circuit 140. In some embodiments, different circuit arrangements may be used to achieve back electromotive force suppression.

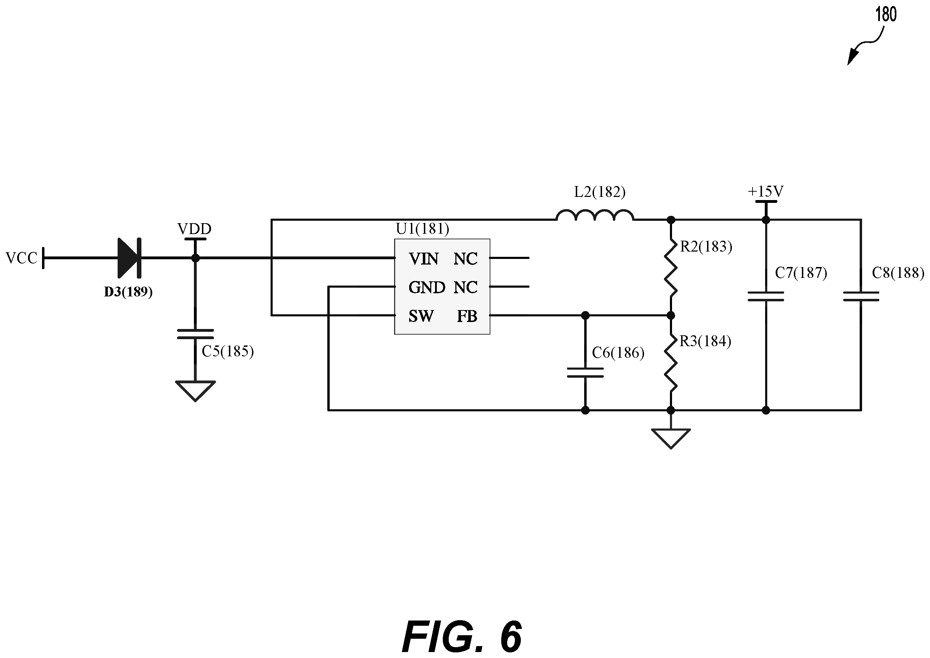

Referring to FIG. 1 and FIG. 6, in the present embodiment, the fan circuit 100 for a server can further include a DC-DC buck circuit 180. An input terminal of the DC-DC buck circuit 180 is connected to the output terminal of the π-type filter circuit 130, and an output terminal of the DC-DC buck circuit 180 is connected to a power input terminal of the MCU module 110. In some embodiments, the DC-DC buck circuit 180 can include a switching regulator U1 (181), an inductor L2 (182), a second resistor R2 (183), a third resistor R3 (184), a fifth capacitor C5 (185), a sixth capacitor C6 (186), a seventh capacitor C7 (187), an eighth capacitor C8 (188), and a third diode D3 (189). The switching regulator U1 (181), the inductor L2 (182), the second resistor R2 (183), the third resistor R3 (184), the fifth capacitor C5 (185), the sixth capacitor C6 (186), the seventh capacitor C7 (187), the eighth capacitor C8 (188), and the third diode D3 (189) collaborate to provide a regulated output voltage for supplying the MCU module 110. In some embodiments, different power conversion topologies may be used.

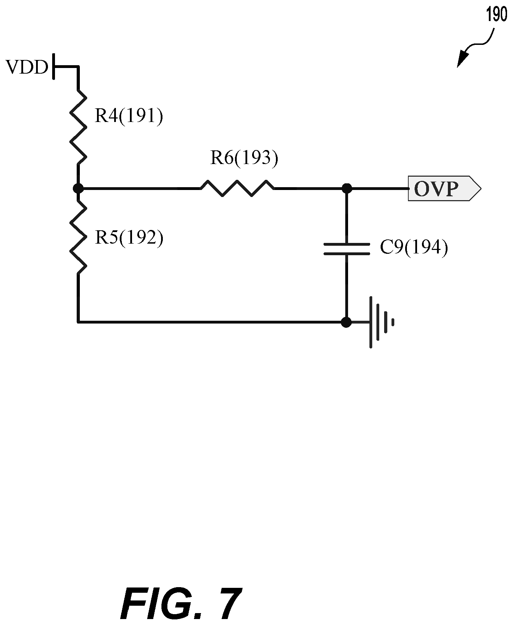

Referring to FIG. 1 and FIG. 7, in the present embodiment, the fan circuit 100 for a server can further include an overvoltage and undervoltage detection circuit 190. An input terminal of the overvoltage and undervoltage detection circuit 190 is connected to the output terminal of the π-type filter circuit 130, and an output terminal of the overvoltage and undervoltage detection circuit 190 is connected to an overvoltage and undervoltage detection terminal of the MCU module 110. By monitoring an input voltage, precise overvoltage and undervoltage protection for an output voltage may be achieved.

In some embodiments, the overvoltage and undervoltage detection circuit 190 can include a fourth resistor R4 (191), a fifth resistor R5 (192), a sixth resistor R6 (193), and a ninth capacitor C9 (194). One end of the fourth resistor R4 (191) serves as the input terminal of the overvoltage and undervoltage detection circuit 190 and is connected to the output terminal of the π-type filter circuit 130. Another end of the fourth resistor R4 (191) is connected in series with the fifth resistor R5 (192) and then grounded. One end of the sixth resistor R6 (193) is connected to a node between the fourth resistor R4 (191) and the fifth resistor R5 (192), and another end of the sixth resistor R6 (193) is connected to one end of the ninth capacitor C9 (194). Another end of the ninth capacitor C9 (194) is grounded. Said one end of the ninth capacitor C9 (194) serves as the output terminal of the overvoltage and undervoltage detection circuit 190 and is connected to the overvoltage and undervoltage detection terminal of the MCU module 110. In some embodiments, different voltage detection configurations may be employed.

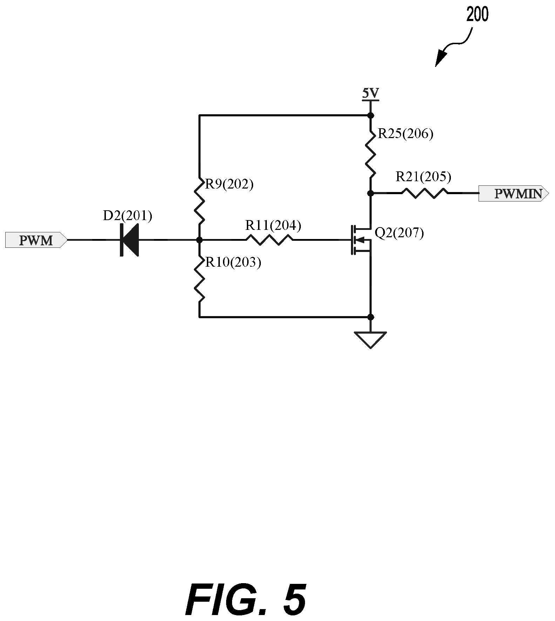

Referring to FIG. 1, FIG. 3A, and FIG. 5, in the present embodiment, the fan circuit 100 for a server can further include a dual-isolation protection PWM signal input circuit 200. An input terminal of the dual-isolation protection PWM signal input circuit 200 is externally connected to a PWM signal, and an output terminal of the dual-isolation protection PWM signal input circuit 200 is connected to a PWM control terminal of the MCU module 110. The dual-isolation protection PWM signal input circuit 200 provides isolation protection for the PWM signal.

In some embodiments, the dual-isolation protection PWM signal input circuit 200 can include a second diode D2 (201), a ninth resistor R9 (202), a tenth resistor R10 (203), an eleventh resistor R11 (204), a twenty-first resistor R21 (205), a twenty-fifth resistor R25 (206), and a second NMOS transistor Q2 (207). A cathode of the second diode D2 (201) is externally connected to the PWM signal, and an anode of the second diode D2 (201) is connected to one end of the ninth resistor R9 (202). Another end of the ninth resistor R9 (202) is connected to a 5V voltage. The anode of the second diode D2 (201) is further connected to one end of the tenth resistor R10 (203), and another end of the tenth resistor R10 (203) is grounded. The anode of the second diode D2 (201) is further connected to one end of the eleventh resistor R11 (204), and another end of the eleventh resistor R11 (204) is connected to a gate electrode of the second NMOS transistor Q2 (207). A drain electrode of the second NMOS transistor Q2 (207) is connected in series with the twenty-fifth resistor R25 (206) and then connected to the 5V voltage. The drain electrode of the second NMOS transistor Q2 (207) is further connected in series with the twenty-first resistor R21 (205) and then serves as the output terminal of the dual-isolation protection PWM signal input circuit 200 connected to the PWM control terminal of the MCU module 110. A source electrode of the second NMOS transistor Q2 (207) is grounded. In some embodiments, different isolation or signal conditioning techniques may be used.

Referring to FIG. 1 and FIG. 3A, in the present embodiment, the fan circuit 100 applied to a server further includes an FG isolation output circuit 210. An input terminal of the FG isolation output circuit 210 is configured to receive an FG signal indicative of rotational speed of the motor 150, for example, from the motor 150 or associated motor circuitry. The FG isolation output circuit 210 then provides an isolated FG signal at an output terminal thereof, and the output terminal of the FG isolation output circuit 210 is connected to an isolation detection terminal of the MCU module 110. The FG isolation output circuit 210 may provide electrical isolation and signal conditioning to improve signal integrity and protect the MCU module 110 from noise or voltage disturbances.

The fan circuit 100 for a server according to the present disclosure uses a high-voltage, low-current design. Compared with a low-voltage, high-current design, the present design reduces a certain amount of thermal loss on the same circuit line under the same power condition while increasing conversion efficiency. In addition, external-use design requirements may be lowered, as well as the number of wires utilized under the same power condition, resulting in cost savings.

The fan circuit 100 for a server according to the present disclosure not only provides bus overcurrent protection for an input current, but it also provides corresponding phase current overcurrent protection during motor 150 operation and stall conditions, resulting in dual protection for both the bus current and the phase current. For stall protection, parameters such as duty size and startup and waiting times may be configured, thereby enabling self-protection. During a stall, a low duty cycle may be employed to initiate startup with minimal current and to perform multiple startup attempts.

The following is a working principle of the present disclosure. An input terminal of the high-voltage hot-swap soft-start switching circuit 120 is externally connected to a power supply VCC. When the DC fan is turned on, the high-voltage hot-swap soft-start switching circuit 120 forms an electronic soft-start switch. The power supply VCC then passes through the π-type filter circuit 130 for surge filtering and is subsequently input to the back electromotive force isolation absorption circuit 170. After absorbing back electromotive force, the back electromotive force isolation absorption circuit 170 outputs a stable voltage VIN supplied to the three-phase inverter bridge circuit 140 to start the motor 150. Meanwhile, the bus current detection overcurrent protection circuit 160 detects bus current and feeds an overcurrent signal back to the MCU module 110 for overcurrent processing. The overvoltage and undervoltage detection circuit 190 detects an output voltage of the π-type filter circuit 130 and feeds a voltage signal back to the MCU module 110 for overvoltage and undervoltage processing. The dual-isolation protection PWM signal input circuit 200 isolates and protects an input PWM signal and then inputs the protected signal to the MCU module 110.

The embodiments of the present application have been described above. The foregoing description is illustrative rather than exhaustive and is not limited to the disclosed embodiments. Many modifications and variations will be apparent to persons of ordinary skill in the art without departing from the scope and spirit of the described embodiments. The terminology used herein is chosen to best explain the principles of the embodiments, the practical application, or technical improvements over technologies found in the marketplace, or to enable others of ordinary skill in the art to understand the embodiments disclosed herein.

## Claims

1. A fan circuit (100) for a server, comprising:
a microcontroller unit (MCU) module (110);
a high-voltage hot-swap soft-start switching circuit (120) configured to receive power from an external power supply;
a three-phase inverter bridge circuit (140);
a π-type filter circuit (130) electrically connected between the high-voltage hot-swap soft-start switching circuit (120) and the three-phase inverter bridge circuit (140);
a motor (150); and
a bus current detection overcurrent protection circuit (160) configured to detect a bus current of the three-phase inverter bridge circuit (140) and provide a corresponding detection signal to the MCU module (110),
wherein the three-phase inverter bridge circuit (140) includes upper bridge arms electrically connected to control terminals of the MCU module (110) and lower bridge arms electrically connected to the motor (150).

2. The fan circuit (100) of claim 1, wherein the high-voltage hot-swap soft-start switching circuit (120) comprises:
a first capacitor (C1, 121) having a first terminal connected to the external power supply and a second terminal connected to ground;
a first resistor (R1, 122) connected in parallel with the first capacitor (C1, 121); and
a switching unit (Q1, 123) connected to the π-type filter circuit (130).

3. The fan circuit (100) of one of claims 1 or 2, wherein the π-type filter circuit (130) comprises:
a second capacitor (C2, 131) having a first terminal connected to the high-voltage hot-swap soft-start switching circuit (120) and a second terminal connected to ground;
a first inductor (L1, 133) connected in series with the second capacitor (C2, 131); and
a third capacitor (C3, 132) connected to the first inductor (L1, 133) and the external power supply,
wherein a connection node between the first inductor (L1, 133) and the third capacitor (C3, 132) forms an output terminal of the π-type filter circuit (130) connected to the three-phase inverter bridge circuit (140).

4. The fan circuit (100) of one of claims 1 to 3, further comprising a back electromotive force (EMF) isolation absorption circuit (170) electrically connected between the π-type filter circuit (130) and the three-phase inverter bridge circuit (140).

5. The fan circuit (100) of claim 4, wherein the back EMF isolation absorption circuit (170) comprises:
a diode having an anode connected to an output terminal of the π-type filter circuit (130);
a capacitor connected to a cathode of the diode and to ground; and
a Zener diode connected in parallel with the capacitor, the Zener diode having an anode connected to ground and being configured to provide an output to the three-phase inverter bridge circuit (140).

6. The fan circuit (100) of one of claims 1 to 5, wherein the MCU module (110) is configured to execute a motor control algorithm.

7. The fan circuit (100) of one of claims 1 to 6, further comprising a DC-DC buck circuit (180) electrically connected between the π-type filter circuit (130) and the MCU module (110) and configured to supply power to the MCU module (110).

8. The fan circuit (100) of claim 7, further comprising an overvoltage and undervoltage detection circuit (190) electrically connected to the π-type filter circuit (130) and configured to detect a voltage and provide a corresponding detection signal to the MCU module (110).

9. The fan circuit (100) of one of claims 1 to 8, further comprising a dual-isolation protection PWM signal input circuit (200) configured to receive an external PWM signal and provide an isolated control signal to the MCU module (110).

10. The fan circuit (100) of one of claims 1 to 9, further comprising an FG isolation output circuit (210) configured to receive a FG signal and output an isolated FG signal to the MCU module (110).

11. The fan circuit (100) of one of claims 1 to 10, wherein a voltage sampling output terminal of the motor (150) is electrically connected to a voltage sampling input terminal of the MCU module (110).
